# EUROPÄISCHE PATENTSCHRIFT

(11) **EP 4 565 439 B1**
(45) Veröffentlichungstag und Bekanntmachung des Hinweises auf die Patenterteilung: **18.03.2026**
(21) Anmeldenummer: 23744796.6
(22) Anmeldetag: 20.07.2023
(51) Int. Cl.: B60H 1/00

(54) **KLIMAGERÄT ZUR MONTAGE AUF EINEM DACH**
AIR-CONDITIONING DEVICE FOR INSTALLING ON A ROOF
DISPOSITIF DE CLIMATISATION DESTINÉ À ÊTRE INSTALLÉ SUR UN TOIT

(30) Priorität: 02.08.2022 DE 102022002794
(43) Veröffentlichungstag der Anmeldung: 11.06.2025
(73) Patentinhaber: Truma Gerätetechnik GmbH & Co. KG, 85640 Putzbrunn (DE)
(72) Erfinder: BEYER, Andreas, 85640 Putzbrunn (DE)
(74) Vertreter: Prinz & Partner mbB
(86) Internationale Anmeldenummer: PCT/EP2023/070217
(87) Internationale Veröffentlichungsnummer: WO 2024/028120

(56) Entgegenhaltungen:
- EP-A1- 3 995 332
- EP-A1- 3 995 333
- DE-A1- 102015 211 592
- US-A1- 2020 198 438

## Beschreibung

Die vorliegende Erfindung betrifft ein Klimagerät zum Temperieren, insbesondere Kühlen der Luft eines Raumes. Das Klimagerät ist dabei zur Montage auf einem Dach, z. B. auf dem Dach eines Fahrzeugs (z. B. eines Wohnmobils oder eines Wohnwagens) ausgestaltet.

Das der Luftkühlung zugrundeliegende Prinzip der Kälteerzeugung mittels eines Kühlkreislaufs ist beispielsweise in der WO 2007/042065 A1 beschrieben. Bei sogenannten Aufdachklimaanlagen, die z. B. bei Wohnwagen oder Wohnmobilen zur Anwendung kommen, sind die Komponenten des Kühlkreislaufs (also Gebläse, Wärmetauscher, Verdampfer, Verflüssiger) in einem Gehäuse auf dem Dach des Fahrzeugs angebracht. In dem Fahrzeug befindet sich lediglich ein Innenluftverteiler. Zwischen dem Gehäuse und dem Innenluftverteiler besteht eine durchgehende Öffnung im Dach. Im montierten Zustand des Klimageräts muss der Übergang zwischen dem Gehäuse und dem Dach abgedichtet sein, damit keine Flüssigkeit über die durchgehende Öffnung in den Innenraum des Fahrzeugs gelangt. Eine Problematik besteht darin, dass sich die Dächer je nach Hersteller voneinander unterscheiden können. Daher sind unterschiedliche Dichtungen erforderlich. Weiterhin kann es von einem Klimagerät unterschiedliche Leistungsklassen geben. Dies geht in der Regel mit unterschiedlich großen Komponenten und daher mit unterschiedlichen Gehäusegrößen einher. Somit ist ggf. eine große Vielfalt von unterschiedlichen Dichtungen erforderlich.

Abdichtungen von Klimaanlagen auf Dächer beschreiben z. B. die DE 20 2017 102 919 U1 oder die JP H07-156 644 A. Der Fixierung einer Klimaanlage auf einem Dach widmen sich beispielsweise die EP 3 411 250 B1, die JP S63-312 263 A oder die US 2020/0198438 A1.

Die EP 3 109 078 beschreibt eine Haube für eine Klimaanlage, in die Komponenten einmontiert werden, Eine untere Gehäusehälfte kann dabei aus einer oder zwei Teilen bestehen. Einen Aufbau eines Innenluftverteilers lässt sich z. B. der DE 10 2021 000 190 A1 entnehmen.

Aus der DE 10 2015 211 592 A1, der EP 3 995 332 A1 und der EP 3 995 333 A1 sind ebenfalls Klimaanlagen bekannt, deren untere Gehäusehälfte aus einem oder zwei Teilen bestehen kann.

Die der Erfindung zugrundeliegende Aufgabe besteht darin, ein Klimagerät vorzuschlagen, das sich durch eine vereinfachte Montage auf einem Dach auszeichnet.

Die Erfindung löst die Aufgabe durch ein Klimagerät zur Montage auf einem Dach, mit einem Gehäuse, einem Innenluftverteiler, einer Auflage und mindestens einer Verlängerungseinheit, wobei in einem montierten Zustand das Gehäuse auf der Auflage und die Auflage auf dem Dach aufliegt, und wobei die Auflage mit der mindestens einen Verlängerungseinheit verbindbar oder verbunden ist. Das Gehäuse mit den entsprechenden Komponenten für den Kühlkreislauf wird auf einer Auflage platziert, die im montierten Zustand auf dem Dach ruht. Die Auflage befindet sich somit im montierten Zustand zwischen dem Gehäuse und dem Dach. Die Auflage ist dabei je nach Ausgestaltung so ausgeführt, sodass sie auf eine Dachstruktur oder auf mehrere unterschiedliche Dachstrukturen angepasst ist. Die Auflage ist weiterhin so ausgestaltet, dass mindestens eine Verlängerungseinheit mit ihr verbindbar ist oder dass sie mit einer Verlängerungseinheit verbunden ist. Die Auflage erlaubt somit generell die Ergänzung um eine Verlängerungseinheit.

Des Weiteren ist im montierten Zustand die Auflage mit mindestens einer Verlängerungseinheit verbunden, so dass das Gehäuse auf der Auflage und auf der mindestens einen Verlängerungseinheit aufliegt. Somit ist das Gehäuse so groß, dass die Auflage allein nicht ausreichend ist, sondern dass mindestens eine Verlängerungseinheit erforderlich ist, auf welcher das Gehäuse zusätzlich zu der Auflage aufliegt.

Zusätzlich weist die Auflage eine mechanische Schnittstelle auf sowie die Verlängerungseinheit eine zu der mechanischen Schnittstelle korrespondierende Schnittstelle. Die Auflage und die Verlängerungseinheit werden also mechanisch miteinander verbunden. Hierfür sind entsprechende Schnittstelle oder Profilierungen vorgesehen. Die Schnittstellen befinden sich dabei vorzugsweise an Stirnseiten der Auflage sowie der Verlängerungseinheit.

Dabei sind die mechanische Schnittstelle der Auflage und die korrespondierende Schnittstelle der Verlängerungseinheit so ausgestaltet und aufeinander abgestimmt, dass sich eine Schwalbenschwanzverbindung ergibt.

Eine Ausgestaltung besteht darin, dass die Verlängerungseinheit eine weitere mechanische Schnittstelle aufweist, und dass die weitere mechanische Schnittstelle gleich der mechanischen Schnittstelle der Auflage ausgestaltet ist. In dieser Ausgestaltung verfügt die Verlängerungseinheit über zwei Schnittstellen: Eine Schnittstelle dient der Verbindung mit der Auflage und ist daher korrespondierend zu der Schnittstelle der Auflage ausgeführt. Die andere Schnittstelle erlaubt die Verbindung mit einer weiteren Verlängerungseinheit, wobei sie wie die Schnittstelle der Auflage ausgeführt ist. Daher kann eine Auflage mit mehreren identischen Verlängerungseinheiten hintereinander beliebig lang verlängert werden.

Eine Ausgestaltung besteht darin, dass die Auflage in Form eines Bretts ausgestaltet ist.

Eine Ausgestaltung sieht vor, dass die Auflage und/oder die Verlängerungseinheit eine Ausgleichsstruktur aufweisen/aufweist, dass die Ausgleichsstruktur im montierten Zustand dem Dach zugewandt ist, und dass die Ausgleichsstruktur einem Ausgleich von Strukturen auf dem Dach dient. Durch die Ausgleichsstruktur werden Strukturen auf dem Dach, also z. B. Erhebungen oder Rillen, ausgeglichen, sodass die sich für das Gehäuse des Klimageräts eine plane Auflagefläche ergibt. Die Ausgleichsstruktur kompensiert somit Erhöhungen oder Vertiefungen des Dachs. Die Ausgleichsstruktur ist dabei in einer Ausgestaltung für einen Typ von Fahrzeugdach ausgeführt. In einer alternativen Ausgestaltung können durch eine Ausgleichsstruktur mindestens zwei unterschiedliche Dachtypen ausgeglichen werden.

Eine Ausgestaltung besteht darin, dass die Auflage und/oder die Verlängerungseinheit eine Positioniereinheit aufweisen/aufweist, dass die Positioniereinheit im montierten Zustand vom Dach abgewandt ist, und dass die Positioniereinheit einer relativen Orientierung zwischen Auflage bzw. Verlängerungseinheit und Gehäuse dient. Bei der Montage des Gehäuses des Klimageräts auf dem Dach des Fahrzeugs besteht meist eine Schwierigkeit darin, dass die Dachaussparung richtig getroffen werden muss. Hierfür verfügt in dieser Ausgestaltung die Auflage und/oder die Verlängerungseinheit über eine Positioniereinheit, die z. B. als Anschlagsfläche für das Gehäuse dient. Alternativ oder ergänzend ist die Positioniereinheit so ausgestaltet, dass sie mit einem Abschnitt des Gehäuses einen Formschluss erzeugen kann.

Gemäß einer Ausgestaltung bestehen/besteht die Auflage und/oder die Verlängerungseinheit zumindest teilweise aus einem Material, dessen Dichte kleiner als 100 kg pro Kubik-meter ist. Das Material ist somit vorzugsweise sehr leicht. In einer Ausgestaltung handelt es sich bei dem Material um expandiertes Polypropylen (EPP), dessen Dichte beispielsweise zwischen 100 kg/m³ und 20 kg/m³ liegt.

Auf der von dem Gehäuse abgewandten und daher dem Dach zugewandten Seite der Auflage und/oder der Verlängerungseinheit ist in einer Ausgestaltung eine Struktur zum Abdichten und/oder zum Ausgleichen der Oberfläche des Dachs vorgesehen.

Eine Ausgestaltung des Klimageräts sieht vor, dass in dem Gehäuse ein Kompressor, ein Verflüssiger, eine Expansionseinrichtung und ein Verdampfer angeordnet sind und einen Kühlkreislauf bilden. Gemäß dieser Ausgestaltung sind alle Komponenten für die Erzeugung eines Kühlkreislaufs in dem Gehäuse und damit außerhalb des Raums angeordnet.

Im Einzelnen gibt es eine Vielzahl von Möglichkeiten, das erfindungsgemäße Klimagerät auszugestalten und weiterzubilden. Dazu wird verwiesen auf die folgende Beschreibung von Ausführungsbeispielen in Verbindung mit der Zeichnung. Es zeigen:
Fig. 1 eine schematische Darstellung eines auf einem Dach installierten Klimageräts,
Fig. 2 eine Draufsicht auf die Oberseite einer Auflage mit einer Verlängerungseinheit und
Fig. 3 eine Draufsicht auf die Unterseite der Kombination auf Auflage und Verlängerungseinheit der Fig. 2.

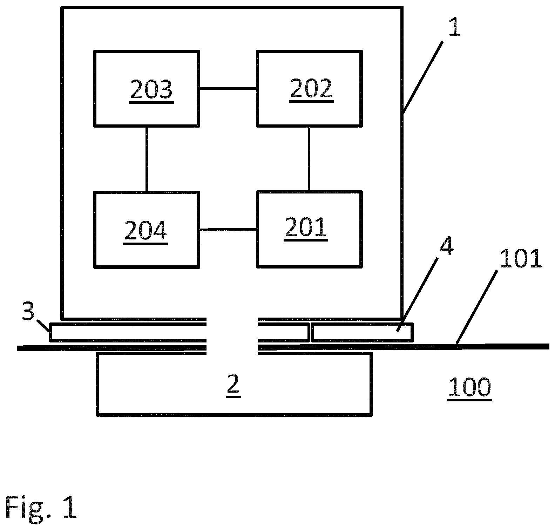

Die Fig. 1 zeigt schematisch den Aufbau eines Klimageräts zum Kühlen eines Raumes 100, der sich unterhalb einem Dach 101 befindet. In dem realisierten Kühlkreis verdichtet ein Kompressor (eine alternative Bezeichnung ist Verdichter) 201 ein gasförmiges Kältemittel, das sich erwärmt und über eine Kältemittelleitung zu einem Verflüssiger (alternative Bezeichnung: Kondensator) 202 transportiert wird. Im Verflüssiger 202 wird die Wärme des Kältemittels - über einen hier nicht dargestellten Wärmetauscher - an die Umgebungsluft (oder Außenluft) aus der Umgebung um den Raum herum abgegeben. Das flüssige und weiterhin unter hohem Druck stehende Kältemittel wird in einer Expansionseinrichtung 203, die z. B. als Drossel ausgestaltet ist, auf einen niedrigeren Druck entspannt, wodurch es abkühlt. Im Verdampfer 204 wird über einen weiteren Wärmetauscher die Luft gekühlt, indem sie ihre thermische Energie auf das Kältemittel überträgt. Dadurch geht das Kältemittel in den gasförmigen Zustand über. Das gasförmige Kältemittel gelangt schließlich zurück zu dem Kompressor 201, sodass der Kühlkreislauf fortgeführt werden kann.

Bei dem Raum 100 handelt es sich beispielsweise um den Innenraum eines Wohnwagens oder eines Wohnmobils. Die Komponenten des Klimageräts zur Realisierung des Kälteprozesses befinden sich in dem Gehäuse 1, das auf dem Dach 101 aufliegt. In dem Raum 100 befindet sich der Innenluftverteiler 2, über den Luft aus dem Raum 100 - als zu temperierende Luft - abgeführt und über den die durch das Klimagerät temperierte Luft in den Raum 100 eingebracht wird. Der Luftverteiler 2 ist dabei an der Innenseite des Dachs 101 angebracht. Zwischen den Komponenten im Gehäuse 1 auf dem Dach 101 und dem Innenluftverteiler 2 unter dem Dach 101 befindet sich eine durchgehende Deckenaussparung. Durch sie gelangt die zu temperierende Luft in das Gehäuse 1 (bzw. zu den darin befindlichen Komponenten) und gelangt die temperierte Luft in den Luftverteiler 2. Zwischen dem Gehäuse 1 und der Außenseite des Dachs 101 befinden sich in der dargestellten Ausführung eine Auflage 3 und eine Verlängerungseinheit 4. In der dargestellten Ausführung verfügt die Auflage 3 über eine Aussparung, die sich oberhalb der durchgehenden Aussparung im Dach 101 sowie unterhalb der Öffnung des Gehäuses 1 befindet.

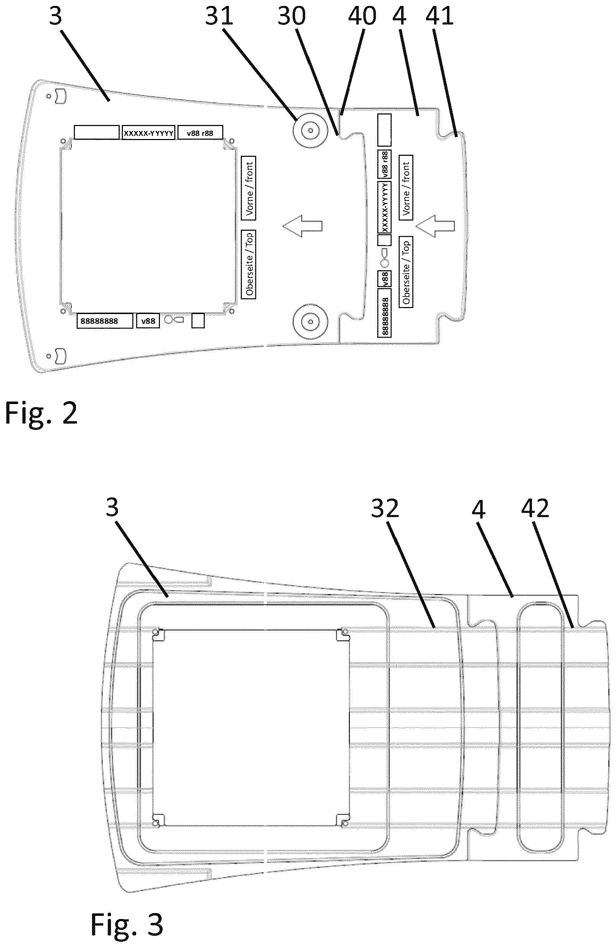

Die Fig. 2 zeigt eine Auflage 3, die mit einer Verlängerungseinheit 4 verbunden ist. Die Auflage 3 verfügt über die Aussparung, durch die die Luft geführt wird. An einem Ende befindet sich eine mechanische Schnittstelle 30 für die Verbindung mit einer Verlängerungseinheit 4. Die Verlängerungseinheit 4 verfügt über eine zu der mechanischen Schnittstelle 30 korrespondierende Schnittstelle 40. Zu erkennen ist, dass sich so eine Schwalbenschwanzverbindung ergibt. An dem anderen Ende der Verlängerungseinheit 4 ist eine weitere mechanische Schnittstelle 41 vorhanden, die in der gleichen Art wie die mechanische Schnittstelle 30 der Auflage 3 ausgestaltet ist. Dies erlaubt es, die Verlängerungseinheit 4 mit einer weiteren identischen Verlängerungseinheit 4 zu verbinden und dadurch die gesamte Anordnung zu verlängern.

Zu erkennen sind auf dieser Oberseite der Auflage 3 die zwei kreisförmigen Positioniereinheiten 31, die bei der Montage des Gehäuses 1 relativ zur Auflage 3 dienen.

In der Fig. 3 ist die Unterseite der Auflage 3 und der Verlängerungseinheit 4 dargestellt. Zu erkennen sind die jeweiligen Ausgleichstrukturen 32, 42, die in der gezeigten Ausführung durchgehende Bahnen bilden. Bei der Montage auf dem Dach 101 befinden sich diese Ausgleichsstrukturen 32, 42 zwischen länglichen Erhöhungen des Dachs 101. Daher ergibt sich auf der Oberseite für das Gehäuse 1 eine glatte Ebene.

Um die Aussparung der Auflage 3 herum ist weiterhin eine umlaufende Nut zu erkennen, in die bei der Montage ein dauerelastisches Dichtmittel eingebracht wird.

## Patentansprüche

1. Klimagerät zur Montage auf einem Dach (101),
mit einem Gehäuse (1), einem Innenluftverteiler (2), einer Auflage (3) und mindestens einer Verlängerungseinheit (4),
wobei in einem montierten Zustand das Gehäuse (1) auf der Auflage (3) und die Auflage (3) auf dem Dach (101) aufliegt,
wobei die Auflage (3) mit der mindestens einen Verlängerungseinheit (4) verbindbar oder verbunden ist,
wobei in dem Fall, dass im montierten Zustand die Auflage (3) mit mindestens einer Verlängerungseinheit (4) verbunden ist, das Gehäuse (1) auf der Auflage (3) und auf der mindestens einen Verlängerungseinheit (4) aufliegt,
wobei die Auflage (3) eine mechanische Schnittstelle (30) aufweist, und wobei die Verlängerungseinheit (4) eine zu der mechanischen Schnittstelle (30) korrespondierende Schnittstelle (40) aufweist, **dadurch gekennzeichnet, dass**
die mechanische Schnittstelle (30) der Auflage (3) und die korrespondierende Schnittstelle (40) der Verlängerungseinheit (4) so ausgestaltet und aufeinander abgestimmt sind, dass sich eine Schwalbenschwanzverbindung ergibt.

2. Klimagerät nach Anspruch 1,
wobei die Verlängerungseinheit (4) eine weitere mechanische Schnittstelle (41) aufweist, und
wobei die weitere mechanische Schnittstelle (41) gleich der mechanischen Schnittstelle (30) der Auflage (3) ausgestaltet ist.

3. Klimagerät nach einem der Ansprüche 1 bis 2,
wobei die Auflage (3) in Form eines Bretts ausgestaltet ist.

4. Klimagerät nach einem der Ansprüche 1 bis 3,
wobei die Auflage (3) und/oder die Verlängerungseinheit (4) eine Ausgleichsstruktur (32, 42) aufweisen/aufweist,
wobei die Ausgleichsstruktur (32, 42) im montierten Zustand dem Dach (101) zugewandt ist, und
wobei die Ausgleichsstruktur (32, 42) einem Ausgleich von Strukturen auf dem Dach (101) dient.

5. Klimagerät nach einem der Ansprüche 1 bis 4,
wobei die Auflage (3) und/oder die Verlängerungseinheit (4) eine Positioniereinheit (31) aufweisen/aufweist,
wobei die Positioniereinheit (31) im montierten Zustand vom Dach (101) abgewandt ist, und
wobei die Positioniereinheit (31) einer relativen Orientierung zwischen Auflage (3) bzw. Verlängerungseinheit (4) und Gehäuse (1) dient.

6. Klimagerät nach einem der Ansprüche 1 bis 5,
wobei die Auflage (3) und/oder die Verlängerungseinheit (4) zumindest teilweise aus einem Material bestehen/besteht, dessen Dichte kleiner als 100 kg pro Kubikmeter ist, und wobei es sich vorzugsweise um expandiertes Polypropylen handelt.

## Claims

1. An air-conditioning device for installation on a roof (101),
comprising a housing (1), an internal air distributor (2), a support (3) and at least one extension unit (4),
wherein, in an installed state, the housing (1) rests on the support (3) and the support (3) rests on the roof (101),
wherein the support (3) can be connected or is connected to the at least one extension unit (4),
wherein, in the event that, in the installed state, the support (3) is connected to at least one extension unit (4), the housing (1) rests on the support (3) and on the at least one extension unit (4),
wherein the support (3) has a mechanical interface (30), and
wherein the extension unit (4) has an interface (40) corresponding to the mechanical interface (30),
**characterized in that** the mechanical interface (30) of the support (3) and the corresponding interface (40) of the extension unit (4) are configured and matched to each other such that a dovetail connection is obtained.

2. The air-conditioning device according to claim 1,
wherein the extension unit (4) has a further mechanical interface (41), and
wherein the further mechanical interface (41) is configured in the same way as the mechanical interface (30) of the support (3).

3. The air-conditioning device according to either of claims 1 to 2,
wherein the support (3) is configured in the form of a board.

4. The air-conditioning device according to any of claims 1 to 3,
wherein the support (3) and/or the extension unit (4) have/has a compensating structure (32, 42),
wherein in the installed state, the compensating structure (32, 42) faces the roof (101), and
wherein the compensating structure (32, 42) serves to compensate structures on the roof (101).

5. The air conditioning device according to any of claims 1 to 4,
wherein the support (3) and/or the extension unit (4) have/has a positioning unit (31),
wherein, in the installed state, the positioning unit (31) faces away from the roof (101), and
wherein the positioning unit (31) serves to provide relative orientation between the support (3) or the extension unit (4) and the housing (1).

6. The air conditioning device according to any of claims 1 to 5,
wherein the support (3) and/or the extension unit (4) consist(s) at least partially of a material the density of which is less than 100 kg per cubic meter, and wherein it is preferably expanded polypropylene.

## Revendications

1. Appareil de climatisation pour le montage sur un toit (101),
comprenant un boîtier (1), un distributeur d'air intérieur (2), un support (3) et au moins une unité d'extension (4),
le boîtier (1) reposant sur le support (3) et le support (3) sur le toit (101) à l'état monté,
le support (3) étant apte à être relié ou étant relié à ladite au moins une unité d'extension (4),
dans le cas où, à l'état monté, le support (3) est relié à au moins une unité d'extension (4), le boîtier (1) reposant sur le support (3) et sur ladite au moins une unité d'extension (4),
le support (3) présentant une interface mécanique (30), et
l'unité d'extension (4) présentant une interface (40) correspondant à l'interface mécanique (30),
**caractérisé en ce que** l'interface mécanique (30) du support (3) et l'interface correspondante (40) de l'unité d'extension (4) sont réalisées et adaptées l'une à l'autre de manière à former une liaison en queue d'aronde.

2. Appareil de climatisation selon la revendication 1,
l'unité d'extension (4) présentant une autre interface mécanique (41), et
l'autre interface mécanique (41) étant réalisée de manière identique à l'interface mécanique (30) du support (3).

3. Appareil de climatisation selon l'une des revendications 1 à 2,
le support (3) étant réalisé sous forme de planche.

4. Appareil de climatisation selon l'une des revendications 1 à 3,
le support (3) et/ou l'unité d'extension (4) présentant une structure de compensation (32, 42),
la structure de compensation (32, 42), à l'état monté, étant tournée vers le toit (101), et
la structure de compensation (32, 42) servant à compenser les structures sur le toit (101).

5. Appareil de climatisation selon l'une des revendications 1 à 4,
le support (3) et/ou l'unité d'extension (4) présentant une unité de positionnement (31),
l'unité de positionnement (31), à l'état monté, étant détournée du toit (101), et
l'unité de positionnement (31) servant à l'orientation relative entre le support (3) ou l'unité d'extension (4) et le boîtier (1).

6. Appareil de climatisation selon l'une des revendications 1 à 5,
le support (3) et/ou l'unité d'extension (4) étant au moins partiellement réalisé(e)/réalisés en un matériau dont la densité est inférieure à 100 kg par mètre cube et qui est de préférence du polypropylène expansé.
